# EUROPEAN PATENT APPLICATION

(11) **EP 4 389 717 A1**
(43) Date of publication of application: **26.06.2024**
(21) Application number: 22383259.3
(22) Date of filing: 22.12.2022
(51) Int. Cl.: C04B 20/04, C04B 26/02, C04B 111/00, C04B 111/54, C04B 111/60

(54) **ARTIFICIAL AGGLOMERATED STONE ARTICLE COMPRISING OPAQUE WHITE GRANULATED VITREOUS MATERIAL AND METHOD FOR THE MANUFACTURE OF SAID ARTICLE**

(71) Applicant: Cosentino Research & Development, S.L., 04850 Cantoria, Almeria (ES)
(72) Inventor: APARISI VENTURA, Juan Francisco, E-12540 Villarreal - Castellón (ES); ÁLVAREZ DE DIEGO, Javier, E-04850 Cantoria - Almería (ES); BENITO LÓPEZ, José Manuel, E-04850 Cantoria, Almería (ES); ÁLVAREZ BALADRÓN, Beatriz, E-04850 Cantoria - Almería (ES); RISUEÑO MORENO, Daniel, E-04850 Cantoria - Almería (ES)
(74) Representative: ABG Intellectual Property Law, S.L.

(57) **Abstract**

The disclosure relates to an artificial agglomerated stone article comprising a granulated vitreous material, having high whiteness and opacity, with a specific oxide composition and to a method for the manufacture thereof.

## Description

### Field of the Disclosure

The disclosure relates to artificial agglomerated stone articles for construction, decoration, and architecture, as well as to the composition and manufacture thereof. Particularly, the disclosure relates to the granulated inorganic materials used as a filler in these articles, the properties and the obtaining thereof.

### Background of the Disclosure

Artificial agglomerated stone articles that typically simulate natural stones, and specifically those known as artificial stone surfaces, are common in the construction, decoration, architecture, and design sectors. The processes for the manufacture thereof on an industrial scale are well established today, and their applications partially overlap with those of ornamental natural stones such as marble or granite. Artificial agglomerated stone articles are typically used for manufacturing counters, kitchen countertops, sinks, shower trays, wall or floor coverings, stairs, or the like. For these uses, the aesthetic aspect and the conservation thereof over the entire useful life of the product are of vital importance. It is therefore necessary for these articles to have a high mechanical strength (to bending, abrasion, scratching), low porosity (low stainability), and high chemical resistance (for example, to acid etching).

One of the traditionally most popular agglomerated artificial stone items, highly valued for their aesthetics, hardness, and resistance to stains and wear, are the so-called quartz agglomerated surfaces. They can be manufactured simulating the colors and patterns of natural stone, or they can also have a completely artificial appearance, for example, with bright red or fuchsia colors. The basis of their composition and the technology currently used for their manufacture dates back to the late 1970s, developed by the Italian company Breton SpA, and is now known commercially in the industry as Bretonstone^{®}. The general concepts of this process are widely disclosed in the technical and patent literature, and are described, for example, in patent publication US4204820. In this production process, quartz and/or synthetic cristobalite granulate, optionally with other inorganic granulates, with varying particle sizes, is initially mixed with a hardenable binder, usually a liquid organic resin. The resulting mixture is homogenized and distributed in a temporary mold or, alternatively, on a sheet of paper, where it is compacted by vacuum vibrocompaction and subsequently hardened to result in boards with dimensions that can often reach 3.2 x 1.6 m², with thicknesses of 0.5-3.0 cm.

Natural quartz and synthetic cristobalite, despite being different materials, have several common characteristics leading them to be used extensively as granulated filler materials for the manufacture of durable construction/decoration surfaces, such characteristics being their high abundance and availability, hardness, translucency, luminosity, and their chemical inertness. Cristobalite is furthermore used in these materials as a bleaching agent, as it generates high opacity and luminosity. Cristobalite is a silica crystalline polymorph at a high temperature, formed in nature as a result of volcanic activity, or artificially, by the catalyzed conversion of quartz at a high temperature in a rotary furnace. However, they have at least one drawback. The fine fraction of respirable crystalline silica dust which is generated during the manufacture of artificial agglomerated stone articles containing quartz or cristobalite, or when this agglomerated material is processed mechanically, poses an occupational health risk to workers. To avoid this risk, workers potentially exposed to high levels of the respirable fraction of crystalline silica dust are required to use personal protective equipment (for example, particulate filtering respirators), to work with ventilation for effective air renewal, and to use measures that control the source of dust (for example, processing tools with water supply or dust extraction in the tool itself).

There are several proposals to reduce the content of quartz and/or cristobalite in quartz agglomerated surfaces, replacing it with another mineral or with an inorganic synthetic material. For example, EP3805176A1 describes the use of certain feldspar granulates with specific compositions as a substitute for quartz. WO2021019020 and WO2021018996 describe granulated synthetic silicates and their use in agglomerated artificial stones.

The use of glass granulates, such as recycled or fritted glass, has also been proposed.

Document US 2020/0115278 A1 relates to the use of synthetic aggregates and fillers with hardness greater than 5 Mohs and with crystalline silica <1% by weight, together with a binder, for the manufacture of articles in the form of plates or blocks. Particular embodiments of the synthetic aggregates are amorphous frits. This document states as advantageous when the frits have a high degree of whiteness (with L>95) or are translucent.

In turn, GB 1402951 A1 relates to the manufacture of opaque white glass by annealing avoiding the use of opacifiers (such as B₂O₃), based on the segregation of the CaO-MgO-Al₂O₃-SiO₂ system during melting and annealing of the glass.

WO 2020053825 A1 discloses inert fillers without crystalline silica especially useful for coatings, paints, adhesives, plasters, and resins. Frits are mentioned as such inert fillers, with a wide range of compositions, and are described as giving rise to a whiteness comparable to that of quartz.

WO 2021048749 A1 describes a method for the manufacture of granulated materials for use in articles in the form of plates or blocks from a mixture containing a binder. The granulated materials are opaque and white in color. The manufacture of the granulated materials avoids the use of zirconium oxide or fluorine to achieve opacity and is characterized by incorporating a step for recrystallizing the molten material consisting of a heat treatment (or annealing) at a temperature of 1030-1170°C for at least 15 minutes after melting the raw materials, and before the molten material is cooled and ground. This treatment results in the formation of approximately 70-75% crystalline white calcium silicates (but not silicon dioxide).

EP 3945078 A1 discloses a glass-ceramic material, white or nearly white in color, which can be used to replace cristobalite and/or quartz fillers in artificial stone and paint applications. The glass-ceramic material comprises crystalline diopside (42-80% by weight) and an amorphous vitreous phase and is manufactured by means of a calcination process in which the sodium feldspar promotes the development of the vitreous phase by embedding the other starting materials in it and generating the diopside phase.

EP 3945079 A1 mentions glass compositions which can be used as filler material instead of cristobalite and/or quartz, especially for resin-bonded mineral composite artificial stone. One example mentions a composition with mainly SiO₂, MgO, and CaO, resulting in an essentially amorphous material with colorimetric properties comparable to cristobalite.

The inventors identified that despite these proposals, there is still a need for an alternative and/or improved vitreous granulated material with high opacity and whiteness that can be used to replace cristobalite in artificial agglomerated stones.

In fact, an objective of the inventors is to find a composition of a material that results, without the need for recrystallization or annealing steps, in high opacity and whiteness, and that vitrifies at a relatively low temperature, while exhibiting a low viscosity of the molten material. The low vitrification temperature results in lower energy consumption during melting and higher productivity. On the other hand, the low viscosity of the melt generates greater diffusion and mixing of melt components, and better deaeration (elimination of trapped bubbles), generating vitreous material with better homogeneity and reduced porosity or defects.

It is known that compounds that generate alkali oxides (Na₂O, K₂O, MgO) during melting can reduce the vitrification temperature and the viscosity of the melt. However, for the application of the vitreous material as a filler material in agglomerated artificial stone, these oxides are undesirable since they are associated with a high susceptibility to chemical etching (surface stainability) and hydrolysis.

After extensive research and experimentation, the inventors propose in an original manner an alternative and/or improved, essentially amorphous, granulated vitreous material of high homogeneity, whiteness and opacity, and comprising B₂O₃ and low concentrations of Na₂O, K₂O, and MgO in its composition, for use as a filler material in agglomerated artificial stone articles. The granulated vitreous material additionally exhibits excellent chemical inertness.

Another objective of the present disclosure is to propose an improved method that allows the manufacture of the granulated vitreous material comprising B₂O₃ in its composition. This method generates the vitreous material of high homogeneity, excellent chemical resistance, whiteness and opacity by rapid cooling of the melt, without the need for a recrystallization, annealing, or tempering step.

### Summary of the Disclosure

The disclosure contained herein relates to an artificial agglomerated stone article comprising a granulated vitreous material of high homogeneity, whiteness, opacity and resistance to chemical etching. The improved vitreous material can be defined as in the claims and comprises B₂O₃ and a specific composition of the remaining oxides. Furthermore, the vitreous material is characterized by being predominantly amorphous. This vitreous material can be used to replace cristobalite in artificial agglomerated stone articles, with the advantage that it does not contain crystalline silica and, therefore, that it does not generate the problems associated with said material.

The high chemical inertness of the granulated vitreous material increases the resistance to staining and the resistance to hydrolysis of the artificial agglomerated stone, which are essential properties for most of the uses of these materials.

Therefore, in a first aspect, the disclosure relates to an artificial agglomerated stone article comprising a granulated vitreous material and a hardened binder, wherein the granulated vitreous material has a composition comprising:

| | % by weight |
|---|---|
| SiO₂ | 55 - 65% |
| Al₂O₃ | 1.5 - 5.5% |
| CaO | 25 - 34% |
| B₂O₃ | 1 - 4% |
| Na₂O | 0 - 0.5% |
| MgO | 0 - 2% |
| K₂O | 0 - 2% |

and is further characterized in that the granulated vitreous material has a total content of amorphous phase in the range of 90-100% by weight, with respect to the weight of the granulated vitreous material.

The claimed composition of the vitreous material, and of the melt from which it is generated, develops the homogeneity, opacity, and whiteness sought already during melting, such that it is maintained during the sudden cooling at room temperature (quenching), without the need for annealing or tempering. Without wishing to be a limiting hypothesis, it is estimated that the development of whiteness already in the melt is due to the segregation of vitreous phases at the microscopic level, which produces a scattering of the incident light resulting in the white color and the high opacity that can be seen. This is achieved without relevant devitrification and without significantly generating crystalline phases.

In a second aspect, the disclosure relates to the use of a granulated vitreous material such as that defined in the first aspect, for the manufacture of an artificial agglomerated stone article.

In a third aspect, the disclosure relates to a method for the manufacture of an artificial agglomerated stone article comprising the following steps:
i) preparing a mixture comprising a granulated vitreous material such as that defined in the first aspect and a hardenable binder,
ii) vacuum vibrocompacting the unhardened mixture obtained in step i), and
iii) hardening the compact mixture obtained in step ii).

In embodiments of this third aspect, the granulated vitreous material is obtained in a process comprising the following steps:
a) heating a mineral composition at a temperature of 1350 - 1600°C to obtain a molten material;
b) cooling the molten material at a temperature equal to or less than 100°C, preferably in a time equal to or less than 45 minutes, to obtain a vitreous material;
c) grinding the vitreous material.

Additional aspects of the disclosure relate to the use of the artificial agglomerated stone article of the first aspect as a construction and/or decoration material, for example for the manufacture of counters, kitchen countertops, sinks, bathroom sinks, shower trays, wall or floor coverings, stairs, or the like, and a the counters, kitchen countertops, sinks, bathroom sinks, shower trays, wall or floor coverings, stairs, or the like, obtained from the artificial agglomerated stone article of the first aspect.

### Description of Figures

Figure 1 shows an image of a vitreous material with a composition according to the claims.
Figures 2-6 show images of comparative vitreous materials.

### Detailed Description of the Disclosure

Unless otherwise defined, all technical and scientific terms used herein have the same meaning as commonly understood by a person having ordinary skill in the art to which this disclosure pertains.

As used herein, the singular forms "a" and "the" also include the plural form unless the context clearly dictates otherwise.

The terms "comprise(s)" and variations thereof, encompass the terms "consist(s) essentially of" and "consist(s) of". Therefore, each time they appear herein, the term "comprise(s)" and variations thereof can be replaced with the terms "consist(s) essentially of" and "consist(s) of".

When a range is indicated herein, both the lower limit and the upper limit are included in said range.

When the amount of a component is given by a range with a lower limit of 0 or 0.0, this means that said component may not be present or may be present in an amount not exceeding the upper limit of the specified range.

As it is used here, the term "% by weight" means percentage by weight (w/w).

The skilled person readily understands that when a composition is defined by the percentage by weight of the components that form same, these values may never add up to a value exceeding 100%. The amount of all the components comprised in said composition add up to 100% of the weight thereof.

For purposes of the disclosure, the expressions "obtainable", "obtained", and equivalent expressions are used interchangeably, and in any case, the expression "obtainable" encompasses the expression "obtained".

Unless specifically indicated otherwise, or unless clearly inconsistent, all the embodiments disclosed in relation to one aspect of the disclosure are also applicable to the other aspects. Likewise, the present disclosure comprises any combination of the embodiments and preferences described herein, unless indicated otherwise or unless clearly contradicted by the context.

The terms "agglomerated stone" or "artificial agglomerated stone" are generally used and understood in the technical field of the disclosure. For purposes of clarity, but without intending to be limiting, the terms "agglomerated stone" and "artificial agglomerated stone" refer herein at least to all the materials included in the definition contained in European standard EN 14618:2009.

In the context of this disclosure, vitreous material is defined as an inorganic material, resulting from raw materials being melted and cooled to a rigid condition maintaining at least 20% by weight, preferably at least 90% by weight, of amorphous phase in the composition thereof, and the rest may be made up of one or more crystalline phases. The vitreous material is preferably synthetic.

In the present description, the term "granule" or "granulate" refers to a material in the form of individual units (particles). Thus, the term encompasses units ranging from infinitesimal powder particles with sizes on the micrometer scale to comparatively large particles of material with sizes on the millimeter scale, for example from 1 µm to 10 mm. These terms encompass materials in the form of particles of various shapes and sizes, more or less edged or rounded, including grain particles, flakes, fines, powders, or combinations thereof.

Granulated materials can be obtained in the desired particle size ranges (granulometry) by grinding and sieving/sorting, using methods known in the art.

The term "particle size", also referred to as "particle diameter", as used here, means the diameter of the individual particles. It can be measured statistically by the retention or the passage of a population of particles in calibrated sieves having openings with a known mesh size, where a particle will pass through (and will therefore be smaller than) or will be retained by (and will therefore be larger than) a certain sieve. In the cases throughout this description in which a granulated material is said to have a particle size or a granulometry in a given range, it means that less than 1% of the particles of the total population of particles in a distribution by volume of this material have a particle size outside the given range. In one embodiment, less than 0.5% of the particles of the total population of particles in a distribution of volume for this material have a particle size outside the given range. In another embodiment, less than 0.1% of the particles of the total population of particles in a distribution by volume for this material have a particle size outside the given range. For particles with a particle size < 100 micrometers, the particle size distribution of a sample can be measured, for example, by laser diffraction, for example with commercial equipment designed for that purpose (e.g., Malvern Panalytical Mastersizer 3000 equipped with a Hydro cell). For measurement, the sample can be dispersed in demineralized water with the aid of an ultrasound probe. The laser diffractometer provides particle distribution curves (% particle volume vs. particle size) and statistical values, such as D10, D50, and D90, of the sample particle population (particle size values where 10%, 50%, or 90% of the sample particle population in a distribution by volume is below this value, respectively).

The term "binder" is well known in the art and refers to a component that performs the function of holding together the granulated 'filler' material in order to form the artificial agglomerated stone article. Generally speaking, the binder in unhardened or uncured form is mixed with the granulated material and subsequently hardened or cured to give cohesion and mechanical strength to the artificial agglomerated stone article. In the present disclosure, the binder can be organic, such as organic resins (e.g., thermoset or thermoplastic), or inorganic, such as cements or geopolymers. In one embodiment, the binder of the different aspects of the disclosure can be a hardenable organic resin (before curing) or a hardened organic resin (after curing). The terms hardened organic resin and hardenable organic resin are well known in the art. According to one embodiment, organic resin or hardenable organic resin shall be understood to mean a material of a predominantly organic nature made up of a compound or a mixture of compounds, optionally together with a solvent. The compound or compounds of the mixture of compounds of the resin can be monomeric, oligomeric, or polymeric, optionally with varying molecular weights and degrees of crosslinking. At least some of the compounds of the hardenable organic resin, and optionally also the solvent, will have reactive functional groups capable of being subjected to curing or hardening by means of a crosslinking or curing reaction that hardens the organic resin, giving rise to a hardened organic resin (or hardened binder) when the curing step ends.

The composition in the different aspects and embodiments of the disclosure can be obtained by X-ray fluorescence (XRF), a well-established technique in the technological field of minerals, glass, and ceramics. The composition indicated in each case preferably corresponds to the average, calculated from at least 3 repetitions of the measurement, from the composition of samples containing a known amount of material to be analyzed (for example, 1 gram of material to be analyzed).

The concentration of boron (as B₂O₃) can also be determined by techniques known in the art. For example, by means of alkaline titrimetry, or by means of inductively coupled plasma (ICP) spectrometry. The concentration of boron can be determined according to international standard ISO 21078-1:2008. Alternatively, or in a complementary manner, high-power XRF can be used. Preferably, the method used is alkaline titrimetry.

The amount of crystalline phases and content of amorphous phase in the different aspects and embodiments of the disclosure can be determined by means of X-ray powder diffraction (XRD) analysis, for example using the Rietveld method combined with the use of an internal standard for quantification, a widely used technique in the technological field.

The vitreous material according to the various aspects of the disclosure exhibits excellent properties of appearance and resistance to chemical etching that are superior to those of other vitreous materials with a different oxide composition. These properties render the granulated vitreous material of the disclosure particularly suitable for being used as a filler material in the manufacture of artificial agglomerated stone articles.

The granulated vitreous material according to aspects of the disclosure has a composition comprising:

| | % by weight |
|---|---|
| SiO₂ | 55 - 65% |
| Al₂O₃ | 1.5 - 5.5% |
| CaO | 25 - 34% |
| B₂O₃ | 1 - 4% |
| Na₂O | 0 - 0.5% |
| MgO | 0 - 2% |
| K₂O | 0 - 2% |

with respect to the weight of the granulated vitreous material.

This granulated vitreous material is further characterized in that it has a total content of amorphous phase in the range of 90-100% by weight with respect to the weight of the granulated vitreous material, with the rest being made up of the sum of the crystalline phases comprised in said material (in the event that said crystalline phases are present).

According to particular embodiments of the disclosure, the granulated vitreous material comprises 58 - 63% by weight of SiO₂ with respect to the weight of the granulated vitreous material.

According to particular embodiments, the granulated vitreous material comprises 2.2 - 4% by weight, or even 2.5 - 4% by weight, of Al₂O₃ with respect to the weight of the granulated vitreous material. In additional embodiments, the granulated vitreous material comprises 2.5 - 3.1% by weight of Al₂O₃ with respect to the weight of the granulated vitreous material.

According to particular embodiments, the granulated vitreous material comprises 28 - 33% by weight of CaO with respect to the weight of the granulated vitreous material. In additional embodiments, the granulated vitreous material comprises 29 - 33% by weight of CaO with respect to the weight of the granulated vitreous material.

According to particular embodiments, the granulated vitreous material comprises 1.5 - 3.5% by weight of B₂O₃ with respect to the weight of the granulated vitreous material. In additional embodiments, the granulated vitreous material comprises 2.5 - 3.5% by weight of B₂O₃ with respect to the weight of the granulated vitreous material.

According to particular embodiments, the granulated vitreous material comprises 0 - 0.3% by weight of Na₂O with respect to the weight of the granulated vitreous material. In certain embodiments, it comprises 0 - 0.1% by weight of Na₂O.

According to particular embodiments, the granulated vitreous material comprises 0 - 1.8% by weight of K₂O, or 0 - 1.5% by weight, with respect to the weight of the granulated vitreous material. In additional embodiments, the granulated vitreous material comprises 0.5 - 2% by weight of K₂O, or 0.5 - 1.5% by weight, with respect to the weight of the granulated vitreous material.

According to particular embodiments, the granulated vitreous material comprises 0 - 1.8% by weight of MgO, or 0 - 1.5% by weight, with respect to the weight of the granulated vitreous material. In additional embodiments, the granulated vitreous material comprises 0 - 1% by weight of MgO, or 0 - 0.6% by weight, with respect to the weight of the granulated vitreous material. According to particular embodiments, the granulated vitreous material comprises 0.05 - 1.5% by weight of MgO, or 0.05 - 0.6% by weight, with respect to the weight of the granulated vitreous material.

According to embodiments, the granulated vitreous material has a total content of amorphous phase in the range of 95 - 100% by weight, or even 98 - 100% by weight, with respect to the weight of the granulated vitreous material, with the rest being made up of the sum of the crystalline phases comprised in said material (if they are present).

According to certain embodiments, the granulated vitreous material of the present disclosure has a composition comprising:

| | % by weight |
|---|---|
| SiO₂ | 58 - 63% |
| Al₂O₃ | 2.2 - 4% |
| CaO | 28 - 33% |
| B₂O₃ | 1.5 - 3.5% |
| Na₂O | 0 - 0.3% |
| MgO | 0 - 1% |
| K₂O | 0 - 1.8% |

wherein this granulated vitreous material is further characterized in that it has a total content of amorphous phase in the range of 95-100% by weight, with respect to the weight of the granulated vitreous material.

Preferably, the granulated vitreous material of the disclosure comprises predominately amorphous calcium silicates. In this sense, in certain embodiments the sum of the percentages by weight of SiO₂+CaO in the composition can be in a range of 85 - 97% by weight with respect to the weight of the material. In additional embodiments, the sum of the percentages by weight of SiO₂+CaO in the granulated vitreous material is in a range of 90 - 95% by weight with respect to the weight of the material.

In additional or alternative embodiments of the disclosure, the granulated vitreous material can have a composition wherein the sum of the proportion of SiO₂+Al₂O₃+CaO+B₂O₃ is in the range of 96.0 - 99.9% by weight, or 97 - 99.9% by weight, with respect to the weight of the granulated vitreous material.

In any of the embodiments, the granulated vitreous material may comprise Fe₂O₃ at a concentration of 0.0 - 0.5% by weight, or even 0.0 - 0.2% by weight, with respect to the weight of the granulated vitreous material. In certain embodiments, the granulated vitreous material may comprise 0.05 - 0.5% by weight, or 0.05 - 0.2% by weight, of Fe₂O₃ with respect to the weight of the granulated vitreous material.

In additional or alternative embodiments, the granulated vitreous material may comprise TiO₂ at a concentration of 0 - 0.5% by weight, or even 0 - 0.2% by weight, with respect to the weight of the granulated vitreous material. In certain embodiments, the granulated vitreous material may comprise 0.05 - 0.5% by weight, or 0.05 - 0.2% by weight, of TiO₂ with respect to the weight of the granulated vitreous material.

The granulated vitreous material may comprise other inorganic oxides such as ZrO₂ and/or BaO.

In additional or alternative embodiments, the granulated vitreous material may comprise 0 - 0.3% by weight, or 0 - 0.1% by weight, of ZrO₂ with respect to the weight of the granulated vitreous material.

In additional or alternative embodiments, the granulated vitreous material may comprise 0 - 0.3% by weight, or 0 - 0.1% by weight, of BaO with respect to the weight of the granulated vitreous material.

The granulated vitreous material may comprise silica in crystalline form (e.g. as quartz, cristobalite, and/or tridymite). However, preferably, the amount of crystalline silica in the granulated vitreous material is less than 10% by weight, or even ≤ 5% by weight, with respect to the weight of the granulated vitreous material. In an additional embodiment, the amount of crystalline silica in the granulated vitreous material is ≤2% by weight, or even ≤1% by weight, with respect to the weight of the granulated vitreous material. Therefore, in certain embodiments, the amount of crystalline silica in the granulated vitreous material is 0-9.9% by weight, or 0-5% by weight, or even 0-2% by weight or 0-1% by weight, with respect to the weight of the granulated vitreous material.

In possible embodiments, the sum of the crystalline phases in the granulated vitreous material is 0-9.9% by weight, or 0-5% by weight, with respect to the weight of the granulated vitreous material. In additional embodiments, the sum of the crystalline phases in the granulated vitreous material is 0-2% by weight, or even 0-1% by weight, with respect to the weight of the granulated vitreous material.

The granulated vitreous material can have different particle sizes, preferably comprised between 0.01 mm and 5.0 mm. According to one embodiment, the vitreous material has a particle size in the range of 0.03-2 mm, or even 0.04-1.2 mm. Alternatively, the granulated vitreous material can have a particle size in the range of 0.01-1 mm, or even 0.01-0.6 mm. In additional embodiments, the granulated vitreous material has a particle size of 0.05-0.5 mm.

The granulated vitreous material can be obtained by means of a process comprising the following steps:
a) heating a mineral composition at a temperature of 1350 - 1600°C to obtain a molten material;
b) cooling the molten material at a temperature equal to or less than 100°C, preferably in a time equal to or less than 45 minutes, to obtain a vitreous material;
c) grinding the vitreous material.

The mineral composition used in step a) may comprise one or more minerals. The minerals comprised in this mineral composition can be selected, for example, from the minerals commonly used for the manufacture of glass or frits. There are a number of combinations that can result in the composition of the granulated vitreous material of the disclosure. The person skilled in the art knows how to identify the appropriate minerals and the proportion thereof, which will depend on the composition of each mineral in question, in order to arrive at the composition of the granulated vitreous material of the disclosure. The minerals in the mineral composition can be natural or synthetic, such as minerals in the form of oxides, silicates, carbonates, aluminosilicates, borates. In this sense, silica sand, quartz, sodium feldspar, potassium feldspar, and kaolin are possible raw materials which supply SiO₂ to the final composition of the granulated vitreous material. Alumina (calcined or hydrated), and kaolin are examples of possible minerals supplying Al₂O₃. Calcium carbonate, dolomite, or magnesite can be used as sources of CaO. The B₂O₃ supply can be obtained using boric acid, colemanite, or borax. Likewise, the skilled person knows the minerals suitable for supplying the remaining chemical elements which are or can be comprised in the composition of the granulated vitreous material. In some embodiments, the mineral composition used in step a) comprises boric acid, colemanite, or borax, or a mixture of two or more of same. In some embodiments, the mineral composition used in step a) may comprise any mineral selected from the group made up of quartz, feldspar sand, sodium feldspar, potassium feldspar, dolomite, calcium carbonate, sodium carbonate, lime, alumina, colemanite, or a mixture of two or more of same. In additional embodiments, the mineral composition comprises a mineral selected from calcium carbonate, lime, feldspar sand, colemanite, dolomite, sodium feldspar, potassium feldspar, and/or a mixture of two or more of same.

The components of the mineral composition, and the mineral composition, in some embodiments have a particle size less than 100 micrometers, for example with a D90 less than 65 micrometers, even less than 45 micrometers, to favor the homogenization and melting of the mineral composition. In a particular embodiment, the components of the mineral composition, and the mineral composition, have a particle size less than 100 micrometers, with a maximum of 10% by volume of particles with a size > 45 micrometers.

The mineral composition is heated in step a) at a temperature reaching 1350-1600°C, or 1400-1550°C, at its maximum point to produce a molten material. In a particular embodiment, the mixture is heated at a temperature reaching 1350-1500°C, or even 1400-1500°C at its maximum point. In one embodiment, the mixture is heated at the maximum temperature indicated for 0.3-2 h, or for 0.4-1.5 h. In a particular embodiment, step a) is performed in an industrial melting furnace or frit furnace.

The composition of the resulting molten material, which corresponds with the composition of the vitreous material of the disclosure, results in a melt with low viscosity, which favors the homogenization and deaeration thereof. The composition of the molten material shows a low tendency for macroscopic phase separation or for the occurrence of devitrification.

The molten material obtained in step a) is cooled rapidly until reaching a temperature equal to or less than 100°C, or even equal to or less than 50°C, generating a solid and cooled vitreous material. In a particular embodiment, it is cooled to a temperature of 10-100°C, or even of 10-50°C. In an additional embodiment, it is cooled to a temperature of 10-30°C. Preferably, this step of cooling is performed rapidly (quenching), to prevent recrystallization of the molten material, such as a time equal to or less than 60 minutes, or even equal to or less than 40 minutes, for example in a time of 0.5-60 minutes, or even of 0.5-40 minutes. In a particular embodiment, step b) comprises cooling the molten material obtained in step a) to a temperature equal to or less than 50°C, in a time equal to or less than 60 minutes, or even equal to or less than 40 minutes. The cooling time is considered to be the period of time it takes for the melt being removed from the furnace to reach the selected cooling temperature over its entire extension.

Suitably, the molten material is subjected to the cooling temperature directly after being removed from the furnace, in a time period not exceeding 10 minutes, or 5 minutes. This cooling can be carried out by means of methods known in the art; for example, pouring the molten material onto a surface at the indicated cooling temperature, pouring the molten material onto a receptacle with circulating water at the indicated cooling temperature, passing the molten material between cooled rollers with water at the indicated cooling temperature, or by means of contact with air at the indicated cooling temperature.

The chemical composition of the molten material (which is derived from the composition of the vitreous material of the disclosure) together with its rapid cooling (by quenching) result in an essentially amorphous cooled vitreous material, with high homogeneity, opacity, and whiteness.

In embodiments of the claimed method, this method does not comprise any separate step of annealing, recrystallization, or tempering, with these steps being understood to be additional heat treatments of the material at temperatures greater than the cooling temperature for a period exceeding 5 minutes, or 1 minute, after the step of melting, and before or after the step of cooling and/or grinding.

The vitreous material obtained in step b), and therefore the granulated vitreous material obtained in step c), may comprise silica in crystalline form (e.g. as quartz, cristobalite, and/or tridymite). However, preferably, the amount of crystalline silica in the vitreous material of step b) or in the granulated vitreous material of step c) is less than 10% by weight, or even ≤ 5% by weight, with respect to the weight of the vitreous material or of the granulated vitreous material, respectively. In an additional embodiment, the amount of crystalline silica in the vitreous material of step b) or in the granulated vitreous material of step c) is ≤2% by weight, or even ≤1% by weight, with respect to the weight of the vitreous material or of the granulated vitreous material, respectively. Therefore, in certain embodiments, the amount of crystalline silica in the vitreous material of step b) or in the granulated vitreous material of step c) is 0-9.9% by weight, or 0-5% by weight, or even 0-2% by weight or 0-1% by weight, with respect to the weight of the vitreous material or of the granulated vitreous material, respectively.

According to some embodiments of the disclosure, the total content of amorphous phase in the vitreous material of step b) or in the granulated vitreous material of step c) can be in the range of 90-100% by weight, or even 95-100% by weight, with respect to the weight of the vitreous material or of the granulated vitreous material, respectively, with the rest being made up of the sum of the crystalline phases comprised in said material. In possible embodiments, the sum of the crystalline phases, for example diopside, anorthite, quartz, wollastonite, albite, cristobalite, or others, in the vitreous material of step b) or in the granulated vitreous material of step c) is less than 10% by weight, or even less than or equal to 5% by weight, with respect to the weight of the vitreous material or of the granulated vitreous material, respectively. For example, 0-9.9% by weight, or 0-5% by weight, with respect to the weight of the vitreous material or of the granulated vitreous material, respectively. In additional embodiments, the sum of the crystalline phases in the vitreous material of step b) or in the granulated vitreous material of step c) is 0-2% by weight, or even 0-1% by weight, with respect to the weight of the vitreous material or of the granulated vitreous material, respectively.

In step c), the cooled vitreous material obtained in step b) is ground (or milled) to produce a granulated vitreous material. Grinding reduces the material to the desired particle size and can be accompanied by a step of sieving and/or sorting of the granulate between defined particle size ranges. The grinding or milling, and the possible sieving/sorting, can be performed for example in an industrial mill, and optionally an automatic industrial sieve, such as those known in the art.

In some embodiments, in step c) the vitreous material is ground or milled to a particle size of 0.01-5 mm. According to one embodiment, the vitreous material is ground or milled to a particle size of 0.03-2.0 mm, or even 0.04-1.2 mm. Alternatively, the vitreous material is ground or milled to a particle size of 0.01-1 mm, or even 0.01-0.6 mm. In additional embodiments, the granulated vitreous material has a size of 0.05-0.5 mm.

In one aspect, embodiments relate to the use of the granulated vitreous material of this description for the manufacture of an artificial agglomerated stone article.

In another aspect, the disclosure relates to the use of the granulated vitreous material obtained by means of the method of preparing the granulated vitreous material described in this description, for the manufacture of an artificial agglomerated stone article.

In an additional aspect, the disclosure relates to an artificial agglomerated stone article containing the granulated vitreous material of the disclosure, or the granulated vitreous material obtained by means of the described method of preparing the granulated vitreous material of the disclosure.

The artificial agglomerated stone article may comprise a hardened binder, such as a hardened organic resin, for example a hardened unsaturated polyester resin.

The artificial agglomerated stone article may comprise inorganic fillers (or inorganic filler material) and a hardened binder, wherein the inorganic fillers comprise the granulated vitreous material of the present disclosure.

In one embodiment, the agglomerated stone article comprises 1-80% by weight, or 2-70% by weight, of the granulated vitreous material according to aspects of this disclosure, with respect to the weight of the agglomerated stone article. In one embodiment, the agglomerated stone article comprises 10-80% by weight, or 20-70% by weight, of the granulated vitreous material with respect to the weight of the agglomerated stone article.

The agglomerated stone article may also comprise inorganic fillers other than the granulated vitreous material of the disclosure, such as stone or stone-like materials or ceramic materials.

In one embodiment, the agglomerated stone article comprises as inorganic fillers other natural or synthetic granulated inorganic materials, other than the granulated vitreous material of the disclosure. The granulated inorganic materials other than the granulated vitreous material can be stone materials, minerals, vitreous materials, and/or ceramic materials. For example, the agglomerated stone article may comprise, in addition to the granulated vitreous material of the disclosure, quartz, glass, silica sand, feldspar sand, feldspar, granite, calcite, basalt, cristobalite, dolomite, ceramic, and/or mixtures thereof. According to one embodiment, the agglomerated stone article comprises 10-90% by weight, or 20-90% by weight, of other granulated inorganic materials other than the granulated vitreous material of the disclosure, with respect to the weight of the artificial agglomerated stone article.

In one embodiment, the artificial agglomerated stone article comprises at least 10% by weight of feldspar granules, or at least 20% by weight, or at least 30% by weight, with respect to the weight of the artificial agglomerated stone article. In a particular embodiment, the artificial agglomerated stone article comprises 10-70% by weight of feldspar granules, or 20-70%, or even 40-70% of feldspar granules, with respect to the weight of the artificial agglomerated stone article. Preferably, the feldspar is sodium feldspar or the mineral albite.

In one embodiment, the artificial agglomerated stone article may comprise micronized feldspar granules (for example sodium feldspar or albite) only with a particle size of 1-200 micrometers, or 1-100 micrometers. In a particular embodiment, the artificial agglomerated stone article comprises 1-30% by weight of micronized feldspar with respect to the weight of the artificial agglomerated stone article.

In particular embodiments, the artificial agglomerated stone article has a low crystalline silica content. Therefore, in certain embodiments, at least 50% by weight, or at least 75% by weight, or at least 90% by weight, or even at least 95% by weight of the inorganic granulated materials other than the granulated vitreous material of the disclosure, have a low crystalline silica content, such as a crystalline silica content (quartz, cristobalite, or other crystalline polymorphs) of 0-30% by weight, or 0-20% by weight, or even 0-10% by weight, with respect to the weight of said inorganic granulated materials.

In certain embodiments, the artificial agglomerated stone article may comprise 0-30% by weight, or even 0-10% by weight, with respect to the weight of the artificial agglomerated stone article, of inorganic granulated materials other than the granulated vitreous material of the disclosure with a crystalline silica content of 30-100% by weight with respect to the weight of said inorganic granulated materials.

According to some embodiments, the crystalline silica content of the artificial agglomerated stone article is ≤50% by weight, or ≤40% by weight, with respect to the weight of the artificial agglomerated stone article. In certain embodiments, the crystalline silica content of the artificial agglomerated stone article is ≤25% by weight, or ≤10% by weight, with respect to the weight of the artificial agglomerated stone article. In certain embodiments, the crystalline silica content of the artificial agglomerated stone article is 0-50% by weight, or 0-40% by weight, or 0-25% by weight, or even 0-10% by weight, with respect to the weight of the artificial agglomerated stone article.

The weight of the inorganic filler (sum of the weights of the granulated vitreous material of the disclosure and of any other granulated inorganic material other than the granulated vitreous material of the disclosure) in the artificial agglomerated stone article is preferably 70-95% by weight, or even 85-95% by weight, with respect to the weight of the artificial agglomerated stone article.

The artificial agglomerated stone article may comprise a hardened binder, for example a hardened organic resin (reacted or polymerized), which is suitably liquid when it is not hardened. This resin can be a hardened thermosetting organic resin, which is suitably liquid when it is not hardened, and can be selected from polyester resins (e.g. unsaturated polyester resins), acrylic resins (e.g. acrylate- and methacrylate-based resins), vinyl resins, and epoxy resins.

The hardened organic resin can be obtained by curing or polymerization of a hardenable organic resin. In one embodiment, the organic resin is an unsaturated polyester resin. The hardenable unsaturated polyester resin can be obtained by polymerization of unsaturated dicarboxylic acids (or anhydrides) with diols. For example, by means of the condensation of an acid or anhydride such as maleic acid or anhydride, fumaric acid, (ortho)phthalic acid or anhydride, isophthalic acid, terephthalic acid, adipic acid, succinic acid or sebacic acid, or mixtures thereof, with a diol such as ethylene glycol, diethylene glycol, propylene glycol, butylene glycol, neopentyl glycol, hydrogenated bisphenol A, or mixtures thereof. The hardenable unsaturated polyester resin may also comprise an ethylenically unsaturated monomer, such as styrene, preferably in an amount of 25-45% by weight with respect to the total weight of the resin.

In a particular embodiment, the hardenable unsaturated polyester resin is obtained by polymerization of a mixture comprising maleic acid or anhydride, (ortho)phthalic acid or anhydride and propylene glycol.

In one embodiment, the hardenable unsaturated polyester resin comprises an unsaturated polyester prepolymer comprising the following monomer units in the following proportions based on the weight of the prepolymer: 20-35% by weight of (ortho)phthalic anhydride, isophthalic acid, or mixtures thereof; 5-20% by weight of maleic anhydride, fumaric acid, or mixtures thereof; 10-25% by weight of propylene glycol; 0-15% by weight of ethylene glycol; and 0-15% by weight of diethylene glycol. The prepolymer can be diluted in 25-45% by weight of styrene, with respect to the weight of the resin.

The artificial agglomerated stone article may comprise 5-30% by weight, or 5-20% by weight, or even 5-15% by weight, of hardened binder or hardened organic resin, with respect to the weight of the artificial agglomerated stone article.

In one embodiment, the artificial agglomerated stone article comprises 70-95% by weight, or even 80-95% by weight, of inorganic fillers (sum of the weights of the granulated vitreous material of the disclosure and of any other granulated inorganic material other than the granulated vitreous material) and 5-30% by weight, or even 5-20% by weight, of hardened binder or hardened organic resin, with respect to the weight of the artificial agglomerated stone article.

Additionally, the artificial agglomerated stone article may comprise additives, such as colorants or pigments, accelerants, or catalysts for the curing and/or hardening of the binder, adhesion promoters improving adhesion between the granulated vitreous material and the binder (for example, silanes), antimicrobial agents, stabilizers against UV light, or mixtures thereof. Additives of these types and the proportion thereof are known in the state of the art. Preferably, these additives can be present in the artificial agglomerated stone article in an amount of 0.01- 5.0% by weight with respect to the weight of the artificial agglomerated stone article.

In one embodiment, the artificial agglomerated stone article has an apparent density of 2000-2600 kg/m³ or of 2100-2500 kg/m³. Apparent density can be measured according to standard EN 14617-1:2013-08.

The artificial agglomerated stone article can be, for example, in the form of a block, slab, tile, sheet, board, or plate. The article can also have more complex forms and can include curved parts, such as in sinks, bathroom sinks, or shower trays. In one embodiment, the dimensions of the artificial agglomerated stone article are at least 1500 mm long, at least 1000 mm wide, and 4-40 mm thick; preferably 2000-3500 mm long, 1000-1800 mm wide, and 4-40 mm thick.

The artificial agglomerated stone material can be used for construction or decoration, for example for the manufacture of counters, kitchen countertops, sinks, bathroom sinks, shower trays, wall or floor coverings, stairs, or the like.

In additional aspects, the disclosure also relates to a method for the manufacture of the artificial agglomerated stone article of the disclosure, which comprises:
i) preparing a mixture comprising the granulated vitreous material of the disclosure and a hardenable binder,
ii) vacuum vibrocompacting the unhardened mixture obtained in step i), and
iii) hardening the compact mixture obtained in step ii).

The mixture of step i) can optionally include other granulated inorganic materials. An unhardened agglomerated mixture is obtained after this step i). The mixture can be prepared by known methods, for example, by stirring the components with the use of conventional mixers.

In one embodiment, the mixture of step i) comprises 1-70% by weight, or 2-50% by weight, of the granulated vitreous material of the aspects of the disclosure with respect to the weight of the mixture.

In one embodiment, the mixture of step i) comprises 10-90% by weight, or 20-90% by weight, of other granulated inorganic materials other than the granulated vitreous material, with respect to the weight of the mixture.

In one embodiment, the mixture of step i) comprises 70-95% by weight, or even 80-95% by weight, of inorganic fillers (sum of the weights of the granulated vitreous material of the disclosure and of any other granulated inorganic material other than the granulated vitreous material of the disclosure) with respect to the weight of the mixture.

In one embodiment, the mixture of step i) comprises 5-30% by weight, or even 5-20% by weight, of hardenable binder or hardenable organic resin, with respect to the weight of the mixture.

Furthermore, the mixture of step i) may include additives, such as colorants or pigments, curing catalysts, curing accelerants, adhesion promoters (for example, silanes), antimicrobial agents, stabilizers against UV radiation, or mixtures thereof. These additives can be present in the mixture of step i) in an amount of 0.01-5.0% by weight with respect to the weight of the mixture.

The agglomerated mixture obtained in step i) can then be transported to a distributor device. Suitable distributors are known, such as those used for the distribution of the agglomerated (unhardened) mixtures in the manufacture of agglomerated quartz surfaces. This distributor device is preferably movable along the length of a temporary mold or of a support sheet. Conveniently, the distributor device deposits the agglomerated mixture in a temporary mold or on a support sheet, forming with the agglomerated mixture a preform which corresponds with the shape of the artificial agglomerated stone article to be produced, with slightly larger dimensions so as to offset the possible shrinkage that occurs during compaction and hardening. In its simplest form, the support sheet can be a sheet of kraft paper or a sheet of plastic. Alternatively, a temporary mold formed by a tray of elastomeric material can be used. The distributor device preferably consists of a feed hopper which receives the mixture in its upper opening and a conveyor belt located below a bottom outlet opening of the hopper, which collects or extracts the mixture from the hopper and deposits it on the support sheet or in the temporary mold. Other distribution devices are possible. The (unhardened) agglomerated mixture which has been distributed in the mold or on the support sheet can preferably be covered with a protective sheet on its upper surface before being subjected to compaction in step ii).

In step ii), the unhardened mixture obtained after step i) is compacted by means of vacuum vibrocompaction to produce a compacted mixture. To that end, in one example, the agglomerated mixture is transported within a compaction area of a press, where it is introduced into a sealable chamber. Next, the chamber is sealed and the vacuum is created with suitable gas evacuation pumps. Once the desired vacuum level has been reached (for example, 5-40 mbar), the piston in the press exerts a compaction pressure simultaneously with the application of a vertical vibration of the piston. During vacuum vibrocompaction, the air trapped in the agglomerated mixture is substantially evacuated.

The compacted mixture obtained after step ii) then moves on to a step iii) of hardening or curing. The step of hardening will depend on the type of binder used, as well as on whether or not suitable hardening catalysts or accelerants are used. In the event that the binder is an organic resin, in this step, the compacted mixture is preferably subjected to the effect of the temperature in a curing furnace, conveniently heated at 80-120°C, with residence times in the furnace that can range between 20 and 60 minutes. After curing, the hardened compacted mixture is cooled to a temperature equal to or less than 40°C. Other types of hardening and curing are possible.

The artificial agglomerated stone article is obtained after step iii) of hardening, and after separation from the mold or support sheet. This article, which can be in the form of blocks, slabs, boards, plates, tiles, or sheets, can be cut and/or calibrated to the desired final dimensions and can receive the desired surface finish (polishing, pumicing, etc.) on one or both of its larger surfaces, depending on the intended application.

### Examples

### Methods

XRF: Analysis of the composition (oxides) of the samples can be performed by X-ray fluorescence on a commercial XRF spectrometer. For example, an approximately 1 g disc of a sample is mixed with lithium tetraborate and calcined in air atmosphere at a temperature of 1050°C for 25 minutes prior to analysis in the spectrometer. The results are reported as relative percentage by weight of oxides (SiO₂, Al₂O₃, etc.), together with the weight "lost on ignition" during calcination (evaporation/desorption of volatile substances, decomposition of minerals and organic matter). The spectrometer is previously calibrated with multipoint calibration curves of known standards concentration. International standard ISO 12677:2011 for XRF analysis can be followed. In addition to the oxide composition, loss on ignition (L.O.I.) is determined during XRF analysis. Loss on ignition denotes the weight of volatile substances, and matter that breaks down into volatile substances, under the conditions of the measurement. Loss on ignition can also be determined separately by methods other than XRF, for example, by thermogravimetry.

XRD: As an example, the identification and quantification of crystalline phases can be performed by powder X-ray diffraction (XRD) combined with the Rietveld method, and with the use of an internal standard. This method allows the total amorphous phase to be quantified as well. The internal standard methodology requires that a known amount of reference standard (corundum, for example) be mixed and homogenized with each sample to be analyzed, optionally using a small amount of isopropanol or other mixing/homogenization adjuvant. A Ge(111) monochromator generating CuKα1 radiation and an X'Celerator detector from commercial equipment (e.g., PANalytical X'Pert Pro automated diffractometer) can be used. X-ray diffraction patterns of the powder can be registered between 4° and 70° in 2θ to 60 s/pass, while rotating to increase the statistical distribution of the particles. Once the powder X-ray diffraction data is obtained, software (e.g., Brucker's DIFFRAC.EVA) can be used to perform identification of the crystalline phases by comparison with the cataloged diffraction patterns. Quantification of crystalline and amorphous phases can be performed with the Rietveld refinement method, e.g., using TOPAS software (from Coelho Software). The content of the crystalline phases and the total amorphous phase is calculated as a percentage by weight of the analyzed sample, after subtracting the amount of the internal standard used.

Granulometry: The particle size, also referred to as particle diameter, of the granules can be measured by means of known sieve separation using sieves of different mesh size. For feldspar granules with a particle size <200 micrometers, the particle size distribution can be measured by laser diffraction with commercial equipment (e.g., Malvern Panalytical Mastersizer 3000 equipped with a Hydro cell). For measurement, the granule sample can be dispersed in demineralized water assisted by an ultrasound probe. The laser diffractometer provides particle distribution curves (particle volume versus particle size) and the statistical values D10, D50, and D90 of the particle population (particle size values in a volumetric distribution where 10%, 50%, or 90% of the sample particle population in a volumetric distribution is below this value, respectively).

To evaluate the susceptibility of the vitreous materials described herein to chemical etching, the following procedure was used. On the surface of the vitreous material to be tested, an aliquot of an aqueous solution of HCl at 18% by volume (v/v) was deposited, and separately another aliquot of an aqueous solution of KOH at a concentration of 100 g/l was deposited. Both aliquots were left on the vitreous material for 96 hours, after which the surface impairment of the vitreous material was visually evaluated.

Colorimetry/transparency with polymerized resin: The colorimetry and transparency of the polymerized resin-bonded granulated material can be measured from discs prepared by mixing 50 g of the granulated material with 50 g of a commercial unsaturated polyester resin catalyzed with 0.75 g of organic MEKP peroxide and 0.12 g of cobalt octoate (6% cobalt). After homogenization, the mixture is poured into an aluminum mold to a thickness of 5 mm. The mixture is then hardened at 70°C for 20 minutes and subsequently allowed to reach room temperature for 30-40 minutes. The aluminum mold is then removed before measuring the colorimetry and transparency of the disc obtained. Colorimetry can be measured on a commercial spectrophotometer (e.g. Konica Minolta CM-3600d) and expressed in L* a* b* (CIELAB color space) coordinate values, where L* is the lightness from black (0) to white (100), a* from green (-) to red (+) and b* from blue (-) to yellow (+). Transparency can be measured on a commercial transparency analyzer (e.g., from Sensure SRL) capable of measuring the ratio of white light transmitted through the disk.

### Example 1: Vitreous material according to the disclosure and comparative materials from mineral mixtures

A series of vitreous materials were prepared in a melting and cooling process, generally as described below.

Several minerals were ground to a particle size less than 100 micrometers, with a maximum of 10% by volume of particles with a size > 45 micrometers, before being mixed and homogenized to form a mineral composition. This mineral composition was added to a crucible which was introduced into a muffle furnace set at a temperature of 1400-1450°C for 30 minutes until obtaining a melt. The liquid melt was taken out of the muffle furnace and poured as a trickle or stream onto a metal plate until it reached room temperature, forming a cooled vitreous material. After 0.5 hours, the vitreous material on the metal plate had already reached room temperature.

The minerals that formed the initial mineral composition were calcium carbonate, calcium oxide, dolomite, feldspar sand, sodium feldspars, potassium feldspars, and colemanite. Their proportion was set based on their specific composition (previously obtained by means of XRF) to result in the vitreous material compositions, obtained by means of XRF, which are included in Table 1.

**Table 1**

| | Composition (% by weight) | | | | | | | | | |
|---|---|---|---|---|---|---|---|---|---|---|
| | SiO₂ | Al₂O₃ | CaO | MgO | Na₂O | K₂O | B₂O₃ | Fe₂O₃ | TiO₂ | Rest |
| **G1** | 60.8 | 2.8 | 31.8 | 0.3 | <0.1 | 1.1 | 3.0 | 0.1 | <0.1 | 0.1 |
| G2* | 62.8 | 2.8 | 32.8 | 0.3 | <0.1 | 1.2 | <0.1 | <0.1 | 0.1 | <0.1 |
| G3* | 58.7 | 2.7 | 31.7 | 0.4 | 0.1 | 1.1 | 5.0 | <0.1 | <0.1 | 0.3 |
| G4* | 57.4 | 2.6 | 35.5 | 0.3 | <0.1 | 1.1 | 2.8 | <0.1 | 0.1 | 0.2 |
| G5* | 58.7 | 6.1 | 30.7 | 0.3 | 0.1 | 1.1 | 2.9 | <0.1 | 0.1 | <0.1 |
| G6* | 59.7 | 2.7 | 31.1 | 2.2 | <0.1 | 1.1 | 2.9 | <0.1 | 0.1 | 0.2 |
| G7* | 59.0 | 2.7 | 30.8 | 0.3 | 3.1 | 1.1 | 2.9 | <0.1 | 0.1 | <0.1 |
| G8* | 62.0 | 0.9 | 32.3 | 0.3 | <0.1 | 1.2 | 3.0 | <0.1 | <0.1 | <0.1 |

| | | | | | | | | | | |
|---|---|---|---|---|---|---|---|---|---|---|
| * Comparative | | | | | | | | | | |

Material G1 is an embodiment according to the disclosure, whereas materials G2-G7 are included for purposes of comparison.

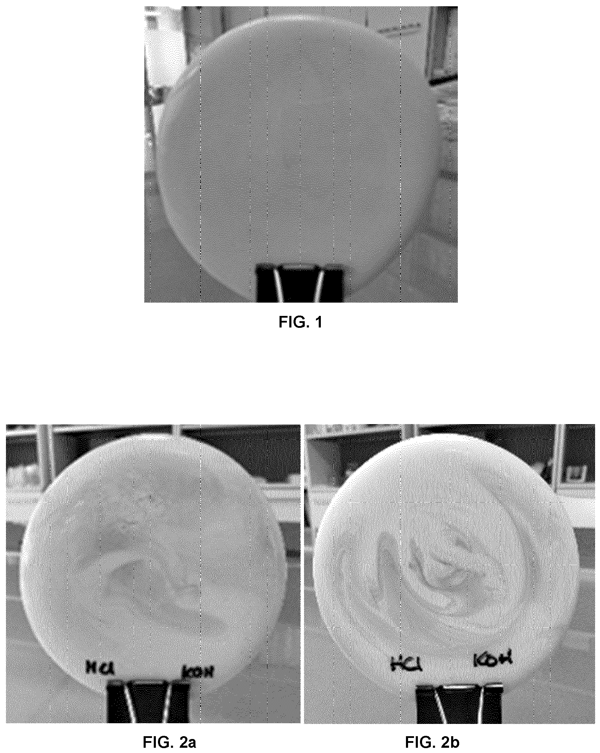

Material G1 showed high whiteness, with high opacity and homogeneity. No visually detectable non-melted regions or transparencies/blueness. G1 exhibited good resistance to chemical etching when exposed to HCl or KOH. Figure 1 shows an image of material G1.

Although also exhibiting good resistance to chemical etching, materials G2 and G3 show greater heterogeneity with the appearance of areas of higher translucency that are bluish, with a lower overall opacity, in both cases. Figures 2a and 2b shows images of G2 and G3, respectively.

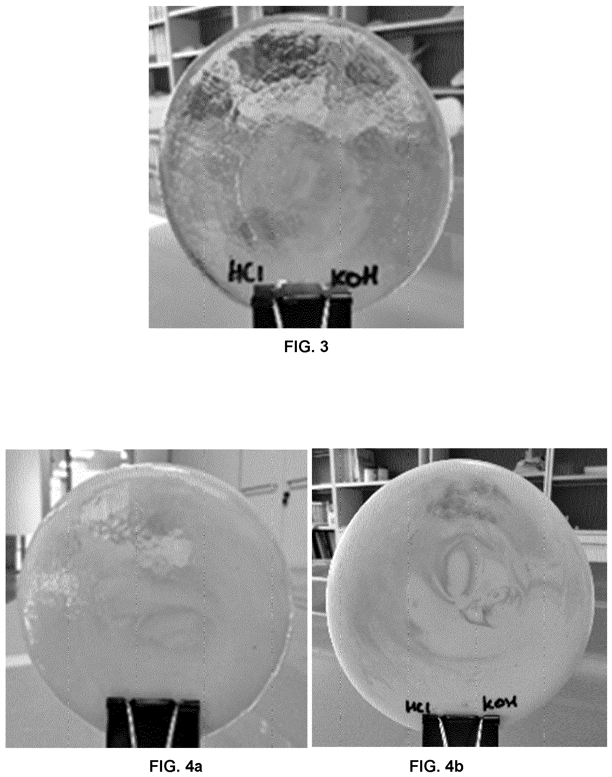

Vitreous material G4, an image of which is shown in Figure 3, turned out to have high translucency. Additionally, the material exhibited high susceptibility to chemical etching with HCl. In turn, the appearance of material G5, as can be seen in Figure 4a, showed high translucency and poor homogeneity, with phase separation of different opacities. In the case of G5, the material did not exhibit susceptibility to chemical etching.

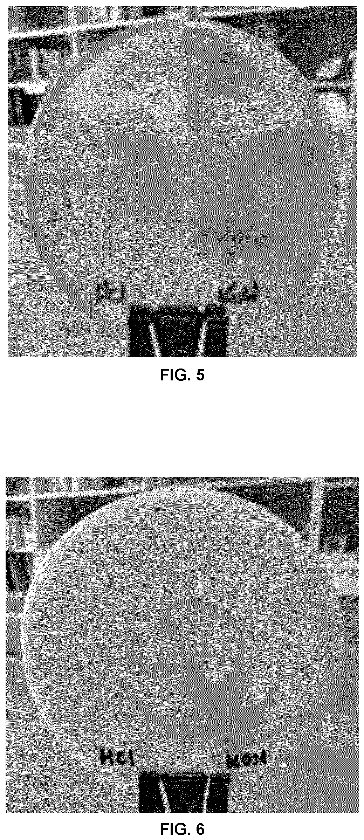

Materials G6 and G8 shown in Figure 4b and Figure 6, respectively, exhibited opacity but also phase separation with bluish areas of greater translucency. In the case of G7, a vitreous material with good homogeneity but highly transparent was obtained, as can be seen in Figure 5. In the three cases G6, G7, and G8, the materials showed good resistance to chemical etching with HCl and KOH.

It can be concluded from these obtained results that the vitreous materials according to the disclosure (for example, G1) are the only materials that combine high opacity and homogeneity, with an absence of phase separation, and with excellent resistance to chemical etching with HCl and KOH. These materials have improved properties with respect to other comparative vitreous materials (G2-G8), which causes these compositions to exhibit significant advantages for use as a granulate in artificial agglomerated stone. Once they are ground, the high opacity and high homogeneity, with an absence of imperfections, together with the low internal or surface porosity of the granulated vitreous material, upon being combined with a binder (polymerized resin), produce an effect of high whiteness and brightness, an absence of surface porosity, low stainability, and generally a high surface quality after polishing, which are all highly valued characteristics in articles of this type. Furthermore, the chemical inertness of the granulated vitreous materials of the disclosure increases the resistance to staingenerating chemical etching and the resistance to hydrolysis of the artificial agglomerated stone.

### Example 2: Preparation of artificial agglomerated stone using vitreous material according to the disclosure

The granulated vitreous material G1i was manufactured in an industrial furnace of the type used in the manufacture of fritted glass. For this manufacture, the minerals calcium carbonate, calcium oxide, feldspar sand, and colemanite were micronized to a particle size less than 100 micrometers, with a maximum of 10% by volume of particles with a size > 45 micrometers and mixed to homogenization. This mixture was fed into the furnace, where it was melted, maintaining a temperature with a maximum value between 1450°C - 1500°C for a period between 40 and 70 minutes at that temperature. The melt was discharged onto a metal tray where the material was rapidly cooled with ambient air. The proportion of minerals in the mixture fed into the furnace was adjusted to reproduce the composition of vitreous material G1 of Example 1 above on a greater scale. It was observed that a low viscosity melt with good deaeration is obtained and that the vitreous material maintains homogeneity, high whiteness and opacity, together with the absence of porosity (bubbles). The material was ground and sorted into two different cuts of particle size 100 - 400 micrometers and 0 - 100 micrometers, respectively, in both cases with a maximum of 1% of particles outside of that range.

No crystalline mineral phases contained in the granulated vitreous material G1i produced were detected when analyzed by XRD. Such mineral phases in the vitreous material are at a concentration by weight < 1%, and the nature of the material is essentially amorphous.

The colorimetry and transparency of the granulated vitreous material in mixtures with polymerized unsaturated polyester resin, of both particle size cuts, were then evaluated with the method described above. The CIE LAB colorimetric coordinates and transparency obtained are shown in Table 2, compared with those obtained by the same method using commercial synthetic cristobalite with the same particle size distribution. For purposes of comparison, the colorimetry and transparency values measured by the same method for granulated synthetic cristobalite materials with equivalent particle size distribution are included in said Table 2.

**Table 2**

| | L* | a* | b* | Transparency |
|---|---|---|---|---|
| Cristobalite 400 - 100 micrometers | 87.6 | 0.9 | 2.4 | 16.1% |
| G1i 400 - 100 micrometers | 86.9 | -0.9 | -2.8 | 12.8% |
| Cristobalite 100 - 0 micrometers | 81.9 | 0.7 | 1.2 | 9.0% |
| G1i 100 - 0 micrometers | 79.5 | 0.4 | -4.0 | 11.0% |

As can be seen, both cuts of G1i present a colorimetry characterized by a very high L* lightness and low transparency, with values close to the values obtained for the granulated cristobalite materials. Slight variations of the a* and b* coordinates are obtained over the cristobalite references, towards values that indicate that the G1i material mixed with resin generates a slightly more bluish tone.

The particle size cuts of 400 - 100 micrometers and 100 - 0 micrometers of G1i were used to manufacture slabs S1 with a size of 30x30 cm² of artificial stone agglomerate. The composition of the slabs corresponded to the composition of a commercial stone agglomerate article (Silestone^{®} Iconic White), where the total of the particle size cuts of 400 - 100 micrometers and 100 - 0 micrometers of cristobalite were replaced with the particle size cut of 400 - 100 micrometers (about 35% by weight of the slab weight) and 100 - 0 micrometers (about 30% by weight of the slab) of G1i. In total, approximately 65% by weight of granulated material G1i was used in slabs S1. The rest of the slab composition was maintained with respect to the commercial products.

For the manufacture of artificial agglomerated stone slabs, the inorganic fillers in the corresponding particle size cuts were mixed with a commercial hardenable liquid unsaturated polyester resin, and with usual additives and pigments already known in the art for the manufacture of these products by the vacuum vibrocompaction method. The mixture was deposited homogeneously distributed between two sheets of Kraft paper and vacuum vibrocompacting in a press suitable for this purpose, until most of the included air was removed. Then, the mixture was placed in a furnace at 85-95°C for 30-60 minutes to harden the resin. When the hardened slab was removed from the furnace, it was calibrated to remove the paper and one of the larger surfaces of the slab was polished.

The CIE LAB colorimetry of slabs S1 manufactured with the cuts of 400 - 100 micrometers and 100 - 0 micrometers of G1i was measured on their polished surface with a commercial spectrophotometer, comparing it with the colorimetry of slabs S2 with the composition of the commercial stone agglomerate article containing the cut of 400 - 100 micrometers and the cut of 100 - 0 micrometers of cristobalite. The results are shown in Table 3.

**Table 3**

| | L* | a* | b* |
|---|---|---|---|
| S1 | 89.0 | 1.2 | -2.0 |
| S2 (comparative) | 91.0 | 1.7 | -0.9 |

As can be seen from the values in Table 3, slabs S1 comprising granular vitreous material G1i exhibit colorimetric coordinates very close to slabs S2 with the composition incorporating granulated cristobalite, with a slight variation towards a more bluish tone, which, being small, if desired, could be compensated with pigmentation.

Slabs S1 and S2 both exhibit a good surface quality on the polished face, with the absence of pores and a similar brightness.

From the above it is evident that granulated material G1i exhibits clearly advantageous features for use in the manufacture of agglomerated stone articles, with suitable homogeneity, colorimetry, porosity, and opacity. Granulated vitreous material G1i can partially or completely replace the cristobalite currently used in these articles, without having the problems associated with the crystalline silica content, and without requiring significant changes in its formulation or in its production.

## Claims

1. An artificial agglomerated stone article comprising a granulated vitreous material and a hardened binder, **characterized in that** the granulated vitreous material has a composition comprising:
| | % by weight |
|---|---|
| SiO₂ | 55 - 65% |
| Al₂O₃ | 1.5 - 5.5% |
| CaO | 25 - 34% |
| B₂O₃ | 1 - 4% |
| Na₂O | 0 - 0.5% |
| MgO | 0 - 2% |
| K₂O | 0 - 2% |
and wherein the granulated vitreous material has a total content of amorphous phase in the range of 90-100% by weight, with respect to the weight of the granulated vitreous material.

2. The article according to claim 1, wherein the concentration of B₂O₃ in the granulated vitreous material is 1.5 - 3.5% by weight, with respect to the weight of the granulated vitreous material.

3. The article according to any one of claims 1 or 2, wherein the concentration of Na₂O in the granulated vitreous material is 0 - 0.3% by weight, with respect to the weight of the granulated vitreous material.

4. The article according to any one of claims 1 to 3, wherein the sum of the proportion of SiO₂+Al₂O₃+CaO+B₂O₃ in the vitreous material is in the range of 96.0 - 99.9%, with respect to the weight of the granulated vitreous material.

5. The article according to any one of claims 1 to 4, wherein the granulated vitreous material has a total content of amorphous phase in the range of 95 - 100%, or 98 - 100%, by weight with respect to the weight of the granulated vitreous material.

6. The article according to any one of claims 1 to 5, wherein the granulated vitreous material has a composition comprising:
| | % by weight |
|---|---|
| SiO₂ | 58 - 63% |
| Al₂O₃ | 2.2 - 4% |
| CaO | 28 - 33% |
| B₂O₃ | 1.5 - 3.5% |
| Na₂O | 0 - 0.3% |
| MgO | 0 - 1% |
| K₂O | 0 - 1.8% |
and wherein this granulated vitreous material is **characterized in that** it has a total content of amorphous phase in the range of 95-100% by weight, with respect to the weight of the granulated vitreous material.

7. The article according to any one of claims 1 to 6, wherein the article comprises 70-95% by weight of inorganic filler, and/or 5-30% by weight of hardened binder.

8. The article according to any one of claims 1 to 7, wherein the article comprises 10-90% by weight of feldspar granules, preferably sodium feldspar or albite granules, with respect to the weight of the article.

9. The article according to any one of claims 1 to 8, wherein the crystalline silica content of the artificial agglomerated stone article is 0-50% by weight, or 0-40% by weight, or 0-25% by weight, or even 0-10% by weight, with respect to the weight of the artificial agglomerated stone article.

10. A method for the manufacture of an artificial agglomerated stone article according to any one of claims 1 to 9, which comprises:
i) preparing a mixture comprising a granulated vitreous material as defined in any of claims 1 to 6 and a hardenable binder,
ii) vacuum vibrocompacting the unhardened mixture obtained in step i), and
iii) hardening the compact mixture obtained in step ii).

11. The method according to claim 10, wherein the granulated vitreous material is obtained by means of a process which comprises:
a) heating a mineral composition at a temperature of 1350-1600°C to obtain a molten material;
b) cooling the molten material at a temperature equal to or less than 100°C, preferably in a time equal to or less than 45 minutes, to obtain a vitreous material; and
c) grinding the vitreous material to obtain the granulated vitreous material.

12. The method according to claim 11, wherein the mineral composition of step a) comprises boric acid, colemanite, or borax, or a mixture of two or more of same.

13. The method according to claim 11, wherein the mineral composition of step a) comprises a mineral selected from the group made up of quartz, feldspar sand, sodium feldspar, potassium feldspar, dolomite, calcium carbonate, sodium carbonate, lime, alumina, colemanite, or a mixture of two or more of same.

14. The method according to any one of claims 11 to 13, wherein step b) is performed directly after step a), without including a separate step of annealing, recrystallization, or tempering.

15. Use of the artificial agglomerated stone article according to claims 1 to 9 for the manufacture of counters, kitchen countertops, sinks, bathroom sinks, shower trays, wall or floor coverings, or stairs.
